# EUROPÄISCHE PATENTSCHRIFT

(11) **EP 1 404 993 B1**
(45) Veröffentlichungstag und Bekanntmachung des Hinweises auf die Patenterteilung: **23.02.2005**
(21) Anmeldenummer: 03730136.3
(22) Anmeldetag: 28.05.2003
(51) Int. Cl.: F16J 15/08, F02F 11/00

(54) **ZYLINDERKOPFDICHTUNG**
CYLINDER-HEAD GASKET
JOINT DE CULASSE

(30) Priorität: 05.06.2002 DE 10224856
(43) Veröffentlichungstag der Anmeldung: 07.04.2004
(73) Patentinhaber: ElringKlinger AG, 72581 Dettingen (DE)
(72) Erfinder: WERZ, Ulrich, 72581 Dettingen (DE)
(74) Vertreter: Haecker, Walter, Dipl.-Phys.
(86) Internationale Anmeldenummer: PCT/EP2003/005616
(87) Internationale Veröffentlichungsnummer: WO 2003/104687

(56) Entgegenhaltungen:
- EP-A- 0 736 709
- EP-A- 0 950 842
- DE-A- 4 219 709
- DE-A- 10 005 455
- DE-C- 19 513 360
- DE-C- 19 548 573
- US-A- 5 713 580

## Beschreibung

Die Erfindung betrifft eine Zylinderkopfdichtung mit einer mindestens eine Blechlage aufweisenden Dichtungsplatte für einen Verbrennungsmotor, welcher mindestens eine Zylinderreihe mit zwei endständigen Zylindern und wenigstens einen Zwischenzylinder besitzt und einen Motorblock sowie einen die Brennräume dieser Zylinder überdeckenden Zylinderkopf aufweist, zwischen dem und dem Motorblock die Zylinderkopfdichtung mittels Zylinderkopfschrauben einspannbar ist, wobei die Dichtungsplatte mit Schrauben- und Fluiddurchgangsöffnungen sowie für jeden der Brennräume mit einer Brennraumöffnung versehen ist und die mindestens eine Blechlage für jede Brennraumöffnung mindestens eine diese umschließende Abdichtsicke aufweist, deren Verformung in Richtung senkrecht zur Dichtungsplattenebene durch jeweils mindestens einen sich konzentrisch zur Sicke erstreckenden Verformungsbegrenzer der Dichtungsplatte begrenzt wird. Wenn bei einer solchen Dichtung eine Blechlage eine Abdichtsicke aufweist, wird für diese Blechlage ein Federstahlblech verwendet.

Die Erfindung betrifft nicht nur Zylinderkopfdichtungen für sogenannte Reihenmotoren, bei denen die Achsen aller Brennräume eine Ebene definieren, sondern auch Zylinderkopfdichtungen für Motoren mit mehreren sogenannten Zylinderbänken, wie beispielsweise V-Motoren, bei denen jede Zylinderbank mehrere in Reihe angeordnete Brennräume und jeweils einen Zylinderkopf aufweist. Schließlich eignen sich die in Rede stehenden Zylinderkopfdichtungen auch für solche Verbrennungsmotoren, bei denen die aufeinanderfolgenden Brennräume einer Zylinderreihe derart gegeneinander versetzt angeordnet sind, daß die Brennraumachsen zwar parallel zueinander verlaufen, jedoch nicht mehr in einer einzigen Ebene liegen. Unter endständigen Zylindern sollen die beiden am Ende einer Zylinderreihe liegenden Zylinder verstanden werden, unter einem Zwischenzylinder ein zwischen den endständigen Zylindern einer Zylinderreihe liegender Zylinder. Von der Erfindung betroffene Zylinderkopfdichtungen weisen also mindestens drei Brennraumöffnungen auf.

Üblicherweise sind die der Verbindung des Zylinderkopfs mit dem Motorblock und dem Einspannen der Zylinderkopfdichtung zwischen diesen beiden Bauteilen dienenden Zylinderkopfschrauben so angeordnet, daß jedem Brennraum vier Zylinderkopfschrauben benachbart sind; betrachtet man die einem Brennraum benachbarten Zylinderkopfschrauben in einer Draufsicht auf den Motorblock (in Richtung der Brennraumachse gesehen) und führt man zur Bestimmung der Positionen der Zylinderkopfschrauben einen Winkel α ein, welcher in der durch die Brennraumachse verlaufenden Längsmittelebene des Motorblocks beziehungsweise der Zylinderbank 0° beziehungsweise 360° beträgt und im Uhrzeigersinn um die Brennraumachse herum zunimmt, so liegen die vier Zylinderkopfschrauben bei ungefähr 45°, ungefähr 135°, ungefähr 225° und ungefähr 315°, und Gleiches gilt dann für die einer Brennraumöffnung benachbarten Schraubendurchgangsöffnungen der Zylinderkopfdichtung. Für das Folgende sollen diejenigen, an eine Brennraumöffnung angrenzenden Bereiche einer Zylinderkopfdichtung, welche den Schraubendurchgangsöffnungen benachbart sind, als schraubennahe Bereiche und diejenigen, an eine Brennraumöffnung angrenzenden Bereiche der Dichtung, welche zwischen den schraubennahen Bereichen liegen, als Zwischenschraubenbereiche bezeichnet werden. Bei modernen Motoren sind jedoch nicht für jeden Brennraum jeweils vier Zylinderkopfschrauben vorgesehen, vielmehr ist in jedem der beiden von einander benachbarten Brennräumen im Motorblock beziehungsweise Zylinderkopf gebildeten Zwickel nur jeweils eine Zylinderkopfschraube angeordnet, so daß die vier einem Zwischenzylinder benachbarten Zylinderkopfschrauben sowohl diesem Zwischenzylinder als auch den beiden diesem Zwischenzylinder benachbarten Brennräumen zugeordnet sind. Teilt man jeden Brennraum längs einer Teilungsebene, welche durch die Brennraumachse und senkrecht zu der von den Achsen aller Brennräume definierten Längsmittelebene einer Zylinderreihe verläuft, und betrachtet man die so entstandenen Brennraumhälften hinsichtlich der von den Zylinderkopfschrauben erzeugten Einspannkräfte, welche auf die an eine solche Brennraumhälfte angrenzenden Bereiche der Zylinderkopfdichtung einwirken, so sind die zu einer außenliegenden Brennraumhälfte eines endständigen Zylinders gehörenden Einspannkräfte doppelt so hoch wie diejenigen Einspannkräfte, welche zu einer innenliegenden Brennraumhälfte eines endständigen Zylinders oder zu irgendeiner Brennraumhälfte eines Zwischenzylinders gehören, vorausgesetzt, daß alle Zylinderkopfschrauben mit demselben Drehmoment angezogen werden. Schon aus diesem Grund sind also die auf eine eingespannte Zylinderkopfdichtung einwirkenden Einspann- oder Pressungskräfte nicht überall gleich hoch, sondern im Bereich der Längsenden einer Zylinderreihe höher als im Bereich des oder der Zwischenzylinder und der innenliegenden Brennraumhälften der endständigen Zylinder, und zwar deshalb, weil für die Betrachtung der Einspannkräfte Motorblock und Zylinderkopf nicht als absolut starre Bauteile behandelt werden können - nimmt man einmal an, daß bei einem Motor Motorblock und Zylinderkopf außerhalb der Brennräume keinerlei Aussparungen oder Hohlräume haben (sieht man von den Bohrungen für Zylinderkopfschrauben ab), so nehmen infolge der elastischen Verformbarkeit von Motorblock und Zylinderkopf die auf die eingespannte Zylinderkopfdichtung einwirkenden, von den Zylinderkopfschrauben hervorgerufenen Pressungskräfte mit zunehmender Entfernung von den Zylinderkopfschrauben ab und mit zunehmender Entfernung von der Quermittelebene der Zylinderreihe zu.

Im Betrieb eines Hubkolben-Verbrennungsmotors ändert sich die Breite oder Weite des die Zylinderkopfdichtung aufnehmenden Dichtspalts zwischen Motorblock und Zylinderkopf periodisch in Abhängigkeit vom Arbeitstakt des jeweils betrachteten Zylinders, weshalb die Zylinderkopfdichtung im Motorbetrieb ständigen Pressungsänderungen unterworfen ist. Bei den von der Erfindung betroffenen Zylinderkopfdichtungen der eingangs erwähnten Art erfolgt die Abdichtung um eine Brennraumöffnung herum zumindest im wesentlichen durch die die Brennraumöffnung umschließende Abdichtsicke, welche zur Aufrechterhaltung einer einwandfreien Abdichtung wegen der vorstehend beschriebenen Dichtspaltänderungen dauerhaft federelastische Eigenschaften aufweisen muß, das heißt die Abdichtsicke muß auch noch nach langer Motorbetriebsdauer in Richtung senkrecht zur Dichtungsplattenebene federelastisch verformbar sein. Um dies zu gewährleisten, weisen die von der Erfindung betroffenen Zylinderkopfdichtungen der eingangs erwähnten Art für jede Brennraumöffnung mindestens einen Verformungsbegrenzer auf, welcher die mögliche Verformung der zu dieser Brennraumöffnung gehörenden Abdichtsicke, das heißt deren Federweg, begrenzt und so die Abdichtsicke vor einer unzulässig hohen Verformung schützt; ein solcher Verformungsbegrenzer wird auch als Stopper bezeichnet. Häufig hat ein solcher Stopper die Gestalt eines metallischen Kreisrings, welcher radial außerhalb oder radial innerhalb der Abdichtsicke auf diejenige Blechlage aufgebracht wurde, in welcher die Abdichtsicke ausgebildet ist; bei einer mehrlagigen Dichtungsplatte kann der Stopper auch auf eine der besagten Blechlage benachbarte Blechlage so aufgebracht sein, daß er bei eingespannter Zylinderkopfdichtung gegen die mit der Abdichtsicke versehene Blechlage anliegt, und zwar radial innerhalb oder radial außerhalb dieser Sicke. Außerdem sind aus dem Stand der Technik noch weitere Ausführungsformen für derartige Stopper bekannt, so zum Beispiel aus der US-5 713 580-A, auf welche später noch näher einzugehen sein wird. Aus Figur 2 dieses Dokuments geht eine dreilagige metallische Zylinderkopfdichtung hervor, bei der zwei Außenlagen um jede Brennraumöffnung herum mit jeweils einer Abdichtsicke versehen sind, welche der anderen Abdichtsicke gegenüberliegt und in Richtung auf eine zwischen den beiden Außenlagen angeordnete Innenlage vorspringt, gegen die die beiden Abdichtsicken bei eingespannter Zylinderkopfdichtung anliegen. Die Innenlage endet mit radialem Abstand zur Brennraumöffnung, und an ihrer der Brennraumöffnung zugewandten Kante ist ein metallischer Stopperring befestigt, welcher radial innerhalb der Abdichtsicken liegt und dicker als die Innenlage ist, so daß er über die beiden Hauptoberflächen der Innenlage in Richtung auf die beiden Außenlagen übersteht. Die für eine Begrenzung der Sickenverformung verfügbare, senkrecht zur Dichtungsplattenebene gemessene wirksame Höhe des Stoppers ist also gleich dem Überstand des Stoppers über die jeweils betrachtete Hauptoberfläche der Innenlage und nicht etwa die Gesamtdicke bzw. -höhe des Stopperrings. Bei der Zylinderkopfdichtung nach der US-5 713 580-A wird berücksichtigt, daß die auf die eingespannte Zylinderkopfdichtung einwirkenden Pressungskräfte mit zunehmendem Abstand von den Zylinderkopfschrauben abnehmen, und zwar dadurch, daß die für eine Begrenzung der Sickenverformung verfügbare, senkrecht zur Dichtungsplattenebene gemessene Höhe des Stopperrings ein Höhenprofil aufweist, welches eine Funktion des Abstands von den Zylinderkopfschrauben ist, das heißt die örtlich unterschiedliche wirksame Höhe des Stopperrings hängt vom jeweiligen Abstand von den Zylinderkopfschrauben ab (bei Betrachtung der Zylinderkopfdichtung senkrecht zur Dichtungsplattenebene).

Aus der DE-C-195 13 360 ergibt sich gleichfalls eine dreilagige metallische Zylinderkopfdichtung, bei der ebenso wie bei der Dichtung nach der US-A-5 713 580 die beiden Außenlagen um jede Brennraumöffnung herum mit jeweils einer Abdichtsicke versehen sind, welche der anderen Abdichtsicke gegenüberliegt und in Richtung auf die Innenlage vorspringt, gegen die die beiden Abdichtsicken bei eingespannter Dichtung anliegen. Die Innenlage ist sowohl radial innerhalb, als auch radial außerhalb der Abdichtsicken jeweils mit einem ringförmigen Stopper versehen. In gleicher Weise wie bei der sich aus der US-A-5 713 580 ergebenden Zylinderkopfdichtung ist der radial innere Stopper mit einem Höhenprofil versehen, welches den Abfall der durch die Zylinderkopfschrauben erzeugten Einspannkräfte mit zunehmendem Abstand von den Zylinderkopfschrauben dadurch kompensieren soll, daß die Höhe des Stopperrings in der Nachbarschaft der Schraubendurchgangsöffnungen der Dichtung geringer ist als in den zwischen den Schraubendurchgangsöffnungen liegenden Bereichen des Stopperrings (siehe Sp. 1, Zeilen 38 - 54 in Verbindung mit Sp. 3, Zeilen 9 - 12). Der radial äußere Stopper kann nach demselben Prinzip profiliert sein, und außerdem ist die Innenlage, den Abdichtsicken gegenüberliegend, mit einem entsprechenden Dickenprofil versehen (siehe Sp. 2, Zeilen 14 - 18, und Sp. 3, Zeilen 20 - 24).

Die Erfindung betrifft nun eine Zylinderkopfdichtung der eingangs erwähnten Art, bei der die für eine Begrenzung der Verformung der Abdichtsicke verfügbare, senkrecht zur Dichtungsplattenebene gemessene wirksame Höhe eines jeden Verformungsbegrenzers, über dessen Umfang gemittelt, einen Mittelwert (im folgenden als Höhenmittelwert bezeichnet) aufweist, was nicht bedeuten soll, daß jeder oder auch nur ein Verformungsbegrenzer eine sich längs seines Umfangs ändernde Höhe aufweisen muß - ist bei einem Verformungsbegrenzer die Höhe längs seines Umfangs konstant, so ist diese konstante Höhe eben auch gleich dem Höhenmittelwert.

Der Trend bei der Entwicklung moderner Hubkolben-Verbrennungsmotoren geht zu immer leichtgewichtigeren Konstruktionen, was nicht nur zur Verwendung von Leichtmetallegierungen, insbesondere für die Zylinderköpfe, geführt hat, sondern auch dazu, daß die Wandstärken um die Brennräume und andere Hohlräume herum, vor allem im Motorblock, immer geringer geworden sind. Damit wurde aber vor allem der Motorblock immer verformungsweicher, das heißt die beim Anziehen der Zylinderkopfschrauben auftretenden elastischen Verformungen des Motorblocks (aber auch des Zylinderkopfs) sind immer größer geworden, mit der Folge, daß der Abfall der von den Zylinderkopfschrauben hervorgerufenen, auf die Zylinderkopfdichtung einwirkenden Pressungskräfte mit zunehmendem Abstand von den Zylinderkopfschrauben immer größer geworden ist. Um die Werkstoffbeanspruchung (insbesondere die durch die Zylinderkopfschrauben hervorgerufenen Verzüge) an den Motorbauteilen Motorblock und Zylinderkopf möglichst gering zu halten, wird ferner versucht, mit möglichst geringen, von den Zylinderkopfschrauben ausgeübten Kräften auszukommen. Diese Entwicklungstrends haben nun dazu geführt, daß unter Umständen die von der Zylinderkopfdichtung bewirkte Abdichtung um den Brennraum eines Zwischenzylinders beziehungsweise um die Brennräume der Zwischenzylinder herum nicht gewährleistet ist, weshalb der Erfindung die Aufgabe zugrunde lag, eine Zylinderkopfdichtung der vorstehend definierten Art, das heißt eine Zylinderkopfdichtung nach dem Oberbegriff des Anspruchs 1, so zu verbessern, daß die Güte der Abdichtung an einem Zwischenzylinder beziehungsweise an Zwischenzylindern verbessert wird.

Erfindungsgemäß läßt sich diese Aufgabe dadurch lösen, daß die Verformungsbegrenzer derart höhenprofiliert sind, daß die Höhenmittelwerte der den endständigen Zylindern zugeordneten Verformungsbegrenzer kleiner sind als die Höhenmittelwerte des weiteren Verformungsbegrenzers beziehungsweise der weiteren Verformungsbegrenzer, welche dem Zwischenzylinder beziehungsweise den Zwischenzylindern zugeordnet sind.

Beim Einbau einer Zylinderkopfdichtung, das heißt beim Anziehen der Zylinderkopfschrauben (und ohne einen Verbrennungsdruck in den Brennräumen), werden die Abdichtsicken federelastisch so weit abgeflacht, bis die Verformungsbegrenzer (Stopper) auf Druck beansprucht werden. Infolge der niedereren, den endständigen Zylindern zugeordneten Verformungsbegrenzer werden dann bei einer erfindungsgemäßen Dichtung die auf ein einem Zwischenzylinder zugeordnetes Abdichtsystem (Sicke und Verformungsbegrenzer) einwirkenden Pressungskräfte im Vergleich zu einer Zylinderkopfdichtung mit gleich hohen Verformungsbegrenzern erhöht, das heißt die Pressungskräfte werden über die Zylinderkopfdichtung vergleichmäßigt. Wie bereits erwähnt, müssen bei einer erfindungsgemäßen Zylinderkopfdichtung die Verformungsbegrenzer über ihren Umfang nicht unbedingt höhenprofiliert werden, um diesen Effekt zu erreichen, das heißt bei Betrachtung eines einzelnen Verformungsbegrenzers kann dessen wirksame Höhe auch über seinen ganzen Umfang konstant sein, auch wenn andere Ausführungsformen bevorzugt werden, wie sich dies aus dem Folgenden noch ergeben wird. Natürlich müssen die die verschiedenen Brennraumöffnungen umschließenden Abdichtsicken nicht alle gleich hoch sein; da der Zylinderkopf dazu neigt, sich unter der Wirkung der hohen, in den Brennräumen entstehenden Gasdrücke aufzuwölben, so daß zwischen den Längsenden des Zylinderkopfs der durch die Zylinderkopfdichtung abzudichtende Dichtspalt in Richtung auf die Quermittelebene des Motorblocks beziehungsweise der Zylinderreihe an Höhe zunimmt, kann es empfehlenswert sein, die verschiedenen Abdichtsicken so zu gestalten, daß ihre Höhe in Richtung auf diese Quermittelebene zunimmt, so daß die Höhe der den Zwischenzylindern zugeordneten Abdichtsicken größer ist als die Höhe der den endständigen Zylindern zugeordneten Abdichtsicken - es muß ja gewährleistet sein, daß auch im Motorbetrieb keine der federelastischen Abdichtsicken vollständig entlastet wird, sondern nur soweit, daß jede Abdichtsicke auch beim höchsten, im Motorbetrieb auftretenden Brennraumdruck noch soweit elastisch verformt ist, daß sie die Abdichtung um den Brennraum herum sicherstellen kann.

Bei einer erfindungsgemäßen Zylinderkopfdichtung bilden die Verformungsbegrenzer örtliche Überhöhungen der Zylinderkopfdichtung, welche sich um jede Brennraumöffnung herum erstrecken und in ihrer wirksamen Höhe so gestaltet sind, daß von den Zylinderkopfschrauben erzeugte Einspannkräfte teilweise von den endständigen Zylindern benachbarten Bereichen auf dem Zwischenzylinder beziehungsweise den Zwischenzylindern benachbarte Bereiche verlagert werden, so daß um den beziehungsweise die Zwischenzylinder herum die senkrecht zur Dichtungsplattenebene verlaufenden Einspann- und damit Abdichtkräfte erhöht werden. Bei vorgegebenem Anzugsdrehmoment für die Zylinderkopfschrauben werden dadurch die Pressungskräfte in den Bereichen der endständigen Zylinder verringert, was zu einem weiteren Vorteil führt: Werden Zylinderkopf und Motorblock aus unterschiedlichen Werkstoffen hergestellt, der Zylinderkopf zum Beispiel aus eine Leichtmetallegierung, der Motorblock aus Grauguß, führen im Motorbetrieb die unterschiedlichen thermischen Ausdehnungskoeffizienten unvermeidbar zu Schiebebewegungen zwischen den den Dichtspalt begrenzenden Dichtflächen von Zylinderkopf und Motorblock; da diese Schiebebewegungen in den Bereichen der Längsenden des Zylinderkopfs am größten sind (im Bereich der Quermittelebene der Zylinderreihe finden solche Schiebebewegungen nicht statt), wird durch die Erfindung der Reibverschleiß an diesen Dichtflächen, aber auch an der Zylinderkopfdichtung reduziert, da im Vergleich zu herkömmlichen Motoren im Bereich der Zylinderkopf-Längsenden geringere Pressungskräfte zwischen der Zylinderkopfdichtung und den Dichtflächen von Zylinderkopf und Motorblock auftreten.

Wie bereits erwähnt, läßt sich das mit der vorliegenden Erfindung angestrebte Ziel grundsätzlich auch mit Verformungsbegrenzern erreichen, deren jeder über seinen gesamten Umfang eine konstante wirksame Höhe besitzt, wobei die wirksame Höhe der den endständigen Zylindern zugeordneten Verformungsbegrenzer kleiner ist als die wirksame Höhe des mindestens einen weiteren Verformungsbegrenzers. Optimaler sind jedoch Ausführungsformen, bei denen die Verformungsbegrenzer derart höhenprofiliert sind, daß die Verformungsbegrenzer einen umso kleineren Höhenmittelwert aufweisen, je größer der Abstand des Zentrums der dem jeweils betrachteten Verformungsbegrenzer zugeordneten Brennraumöffnung von der Quermittelebene der Dichtung ist - die Längsmittelebene der Zylinderkopfdichtung verläuft senkrecht zur Dichtungsplattenebene sowie durch die Zentren der Brennraumöffnungen, während die Quermittelebene der Zylinderkopfdichtung senkrecht zu diesen beiden Ebenen verläuft und von den Zentren der den endständigen Zylindern zugeordneten Brennraumöffnungen gleiche Abstände aufweist.

Wie bereits erwähnt, nehmen wegen der nicht zu vernachlässigenden elastischen Verformbarkeit von Motorblock und Zylinderkopf die von den Zylinderkopfschrauben erzeugten, auf die Zylinderkopfdichtung einwirkenden Pressungskräfte in erster Näherung mit wachsender Entfernung von den Zylinderkopfschrauben ab - von der Zylinderkopfdichtung aus betrachtet ist die Bauteilsteifigkeit von Motorblock und Zylinderkopf an denjenigen Stellen am größten, an denen die beiden Bauteile durch die Zylinderkopfschrauben miteinander verbunden und gegeneinander verspannt sind. Einen Einfluß auf die örtlich unterschiedlichen, auf die eingebaute Zylinderkopfdichtung einwirkenden Pressungskräfte haben aber auch örtliche "Schwachstellen" vor allem des Motorblocks, gegebenenfalls aber auch des Zylinderkopfs: Dort wo diese Bauteile Hohlräume aufweisen, zum Beispiel Durchgänge für Kühlwasser und Motoröl, sind diese Bauteile weniger steif, das heißt verformungsweicher, als in Bereichen ohne solche Hohlräume. Um die örtlich unterschiedliche Bauteilsteifigkeit von Motorblock und/oder Zylinderkopf zu berücksichtigen, wird vorgeschlagen, die erfindungsgemäße Zylinderkopfdichtung so zu gestalten, daß mindestens einer der Verformungsbegrenzer (vorzugsweise alle Verformungsbegrenzer) entlang seines Umfangs entsprechend der bei eingespannter Zylinderkopfdichtung örtlich unterschiedlich verminderten Bauteilsteifigkeit von Motorblock und/oder Zylinderkopf derart höhenprofiliert ist, daß der bei eingespannter Zylinderkopfdichtung auf den Verformungsbegrenzer einwirkenden Pressdruck längs des Umfangs des Verformungsbegrenzers (bei noch nicht betriebswarmem, d. h. kaltem Motor) vergleichmäßigt ist, so daß sich längs des Umfangs des Verformungsbegrenzers nur verhältnismäßig geringfügige Schwankungen des Pressdrucks ergeben. Eine solche Ausführungsform der erfindungsgemäßen Zylinderkopfdichtung berücksichtigt also nicht nur die Abnahme des Pressdrucks mit zunehmender Entfernung von den Zylinderkopfschrauben, sondern auch die örtliche Verminderung des Pressdrucks an einer Stelle, an der die Bauteilsteifigkeit von Motorblock und/oder Zylinderkopf durch einen Hohlraum oder einander benachbarte Hohlräume vermindert ist, so wie dies beispielsweise dann der Fall ist, wenn ein Kühlwasser- oder Motor-öl-Durchgang nahe bei einem Brennraum liegt. In erster Näherung ist die wirksame Höhe eines Verformungsbegrenzers also in seinen schraubennahen Bereichen geringer als in den vorstehend definierten Zwischenschraubenbereichen, bevorzugt wird diesem Höhenprofil jedoch ein Höhenprofil überlagert, welches die vorstehend beschriebenen "Schwachstellen" berücksichtigt und zur Folge hat, daß in der Nähe solcher "Schwachstellen" die wirksame Höhe des Verformungsbegrenzers größer ist als dies der Fall wäre, wenn diese "Schwachstelle" nicht vorhanden wäre.

In diesem Zusammenhang ist zu beachten, daß jede Zylinderkopfdichtung für einen ganz bestimmten Motor konstruiert wird, so daß dem Dichtungskonstrukteur die örtlich unterschiedliche Bauteilsteifigkeit von Motorblock und Zylinderkopf vorgegeben ist und sich die erfindungsgemäße Höhenprofilierung mit der bekannten Finite-Elemente-Methode berechnen läßt.

Vorsorglich sei auch noch darauf hingewiesen, daß das aufgrund der örtlich unterschiedlich verminderten Bauteilsteifigkeit gewonnene Höhenprofil dem "Längsprofil" gemäß dem Grundgedanken der vorliegenden Erfindung, das heißt gemäß Anspruch 1, zu überlagern ist, das heißt die Bemessungsregeln nach Anspruch 1 beziehungsweise Anspruch 2 und nach Anspruch 3 sind für bevorzugte Ausführungsformen miteinander zu kombinieren.

Ein eine Brennraumöffnung umgebendes Brennraum-Dichtelement einer Zylinderkopfdichtung, welches entsprechend der örtlich unterschiedlich verminderten Bauteilsteifigkeit von Motorblock und/oder Zylinderkopf höhenprofiliert ist, geht aus der DE-41 42 600-C2 hervor.

Beim Betrieb eines Hubkolben-Verbrennungsmotors wird die in den Brennräumen entstehende Wärme bereichsweise unterschiedlich gut aus den die Brennräume umgebenden Bereichen vor allem des Motorblocks abgeführt; besonders schlecht läßt sich die Wärmeabfuhr aus solchen Bereichen bewerkstelligen, welche einerseits Brennräumen unmittelbar benachbart sind und andererseits einen erheblichen Abstand von Kühlwasser-Durchlässen aufweisen. Bezüglich der Erhitzung und der Wärmeabfuhr besonders kritisch sind die schmalen Stege beziehungsweise Wandbereiche zwischen nahe beieinander liegenden Brennräumen. Bereiche mit vergleichsweise verminderter Wärmeabfuhr erfahren im Motorbetrieb eine höhere Wärmeausdehnung, welche zu einer bereichsweise verminderten Breite beziehungsweise Höhe des Dichtspalts zwischen Motorblock und Zylinderkopf und damit zu einer bereichsweise höheren Pressung der Zylinderkopfdichtung führen. Dieser Umstand wurde bislang in der Praxis nicht berücksichtigt, sondern man hat im Gegenteil Verformungsbegrenzer im Bereich der schmalen Stege zwischen einander benachbarten Brennraumöffnungen der Zylinderkopfdichtung höher als in anderen Bereich ausgebildet, und zwar im Hinblick auf die an sich geringere Bauteilsteifigkeit vor allem des Motorblocks im Bereich der schmalen Stege oder Wände zwischen nahe beieinander liegenden Brennräumen. Um nun auch die im Motorbetrieb erfolgenden, örtlich unterschiedlichen Wärmeausdehnungen zu berücksichtigen, wird vorgeschlagen, die erfindungsgemäße Zylinderkopfdichtung so zu gestalten, daß mindestens einer der Verformungsbegrenzer entlang seines Umfangs entsprechend der infolge der Betriebstemperatur des Verbrennungsmotors zu erwartenden, örtlich unterschiedlichen Wärmedehnungen von Motorblock und/oder Zylinderkopf derart höhenprofiliert ist, daß der bei eingespannter Zylinderkopfdichtung und Betriebstemperatur des Verbrennungsmotors auf den Verformungsbegrenzer einwirkende Pressdruck längs des Umfangs des Verformungsbegrenzers vergleichmäßigt wird. An Stellen größerer Wärmedehnung wird also die wirksame Höhe des Verformungsbegrenzers vermindert, und zwar im Vergleich zu nach dem Grundgedanken der vorliegenden Erfindung bemessenen Verformungsbegrenzern. Zweckmäßigerweise berücksichtigt man dabei diejenigen Wärmedehnungen, die bei etwa 60 bis100 % der Vollast des Verbrennungsmotors zu erwarten sind, noch besser die für Dauervollast zu erwartenden Wärmedehnungen. Alle diese zu erwartenden Wärmedehnungen lassen sich wiederum durch Finite-Elemente-Analysen berechnen. Natürlich wird auch die der Berücksichtigung der örtlich unterschiedlichen Wärmedehnungen dienende Höhenprofilierung der Längsprofilierung gemäß dem Grundgedanken der vorliegenden Erfindung, d. h. gemäß Anspruch 1 bzw. Anspruch 2, gegebenenfalls auch der Profilierung gemäß Anspruch 3, überlagert.

Sollen sowohl die zu erwartenden, örtlich unterschiedlichen Wärmedehnungen, als auch die örtlich unterschiedlichen verminderten Bauteilsteifigkeiten von Motorblock und/oder Zylinderkopf berücksichtigt werden, ist die erfindungsgemäße Zylinderkopfdichtung so zu gestalten, daß der Verformungsbegrenzer längs seines Umfangs entsprechend einem Mittelwert zwischen Pressdruckerniedrigung infolge örtlich geringerer Bauteilsteifigkeit und Pressdruckerhöhung infolge örtlich größerer Wärmedehnungen derart höhenprofiliert ist, daß der bei eingespannter Zylinderkopfdichtung und Betriebstemperatur des Verbrennungsmotors auf den Verformungsbegrenzer einwirkende Pressdruck längs des Umfangs des Verformungsbegrenzers vergleichmäßigt wird.

Dieser Vorschlag ergibt sich als solcher aus der deutschen Patentanmeldung Nr. 101 17 178 der Firma ElringKlinger AG vom 5. April 2001, jedoch nicht in Verbindung mit der Längsprofilierung der Verformungsbegrenzer gemäß dem Grundgedanken der vorliegenden Erfindung, das heißt gemäß Anspruch 1.

Wie in der vorgenannten deutschen Patentanmeldung vorgeschlagen, empfiehlt es sich auch für eine erfindungsgemäße Zylinderkopfdichtung, die wirksame Höhe des Verformungsbegrenzers zwischen einander benachbarten Brennraumöffnungen gegenüber der wirksamen Höhe in der Nachbarschaft von Schraubendurchgangsöffnungen zu erniedrigen.

Bei erfindungsgemäßen Zylinderkopfdichtungen können Verformungsbegrenzer nicht nur auf den einen, zum Beispiel radial inneren Seiten der Abdichtsicken vorgesehen sein, vielmehr kann die Dichtungsplatte sowohl radial innerhalb als auch radial außerhalb der Abdichtsicken mit Verformungsbegrenzern versehen sein.

Wie bereits erwähnt, kann der Verformungsbegrenzer an der mit der Abdichtsicke versehenen Blechlage vorgesehen sein, bei mindestens zweilagigen Dichtungen, bei denen die eine Blechlage mit einer Abdichtsicke für eine Brennraumöffnung versehen ist, kann der Verformungsbegrenzer aber auch an einer anderen Blechlage vorgesehen sein.

Bei Zylinderkopfdichtungen, bei denen die Verformungsbegrenzer auf eine Blechlage aufgebracht sind, kann statt der Verformungsbegrenzer die Blechlage in den Bereichen der Verformungsbegrenzer erfindungsgemäß höhenprofiliert sein, es ist aber auch möglich, sowohl die Blechlage, als auch die Verformungsbegrenzer mit Höhenprofilen zu versehen.

Bei einer erfindungsgemäßen Zylinderkopfdichtung muß der Verformungsbegrenzer nicht unbedingt als separates Teil hergestellt und dann an einer Blechlage befestigt werden; vielmehr kann ein Verformungsbegrenzer auch zum Beispiel durch einen Prägevorgang an eine Blechlage angeformt werden, zum Beispiel durch Stauchen der Blechlage, und schließlich ist es auch möglich, eine Blechlage durch Prägen oder einen tiefziehähnlichen Vorgang so zu verformen, daß an ihr ein Verformungsbegrenzer ausgebildet wird.

Weitere Merkmale, Vorteile und Einzelheiten der Erfindung ergeben sich aus der nachfolgenden Beschreibung sowie der beigefügten zeichnerischen Darstellung bevorzugter Ausführungsformen der erfindungsgemäßen Zylinderkopfdichtung; in der Zeichnung zeigen:
- Fig. 1: eine Draufsicht auf einen Teil einer mehrlagigen erfindungsgemäßen Zylinderkopfdichtung, bei der ein Teil der obersten Blechlage weggebrochen wurde;
- Fig. 2: einen Schnitt nach der Linie 2-2 in Fig. 1;
- Fig. 3: eine Draufsicht auf die vollständige mittlere Blechlage dieser Zylinderkopfdichtung, und

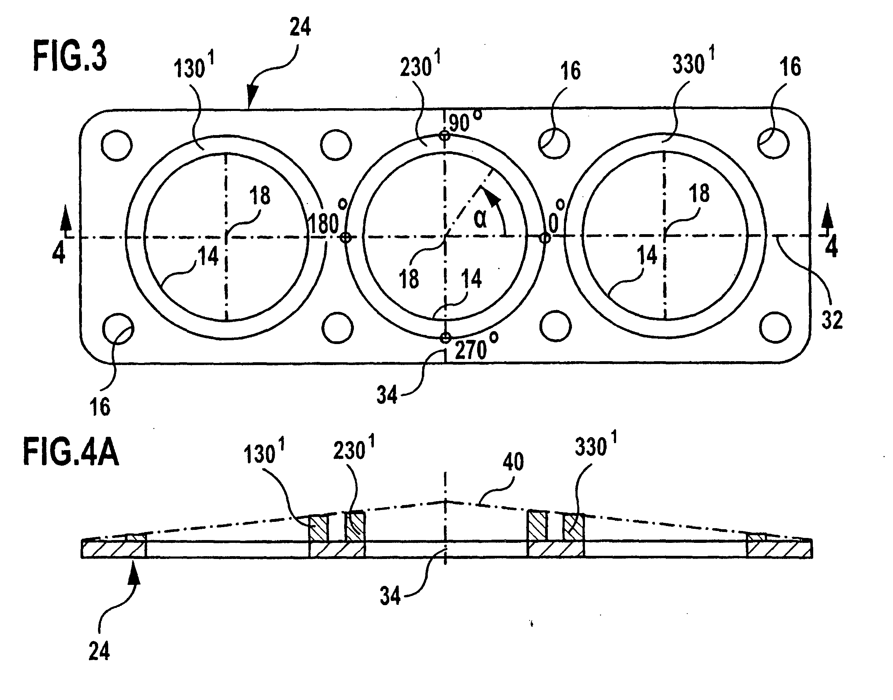

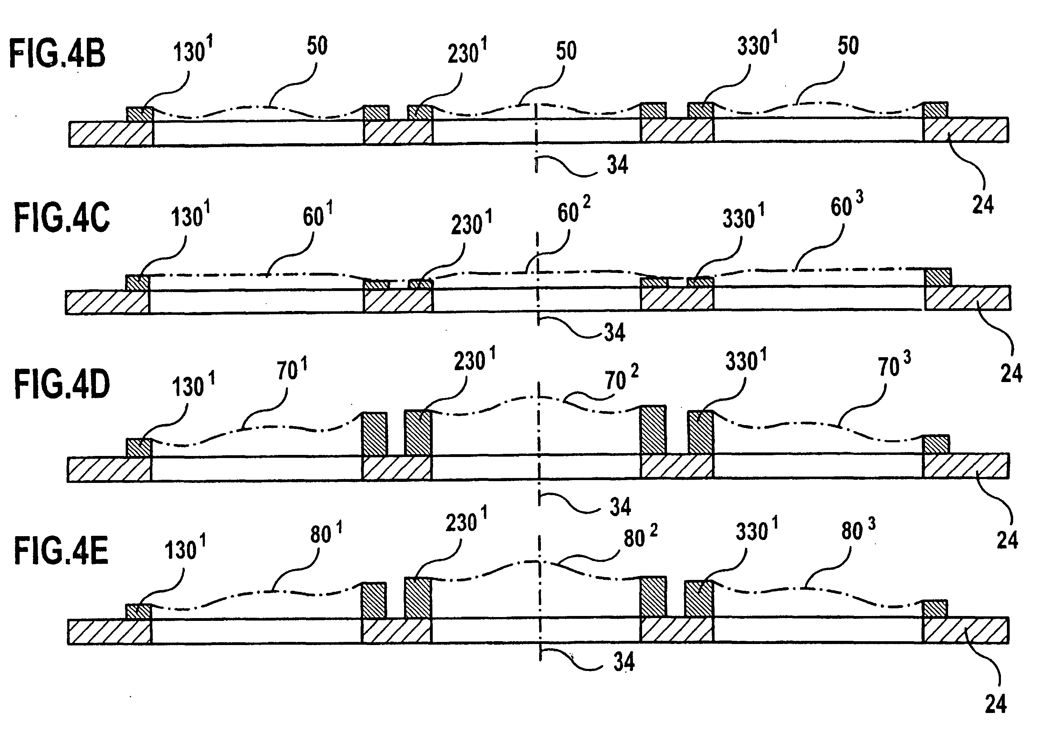

- Figuren 4A bis 4E: Schnitte nach der Linie 4-4 in Fig. 3, d. h. Längsschnitte durch die mittlere Blechlage, wobei die Fig. 4A die Höhenprofilierung der Verformungsbegrenzer (im folgenden als Stopper bezeichnet) gemäß dem Grundgedanken der Erfindung zeigt (jedoch ohne Berücksichtigung örtlich unterschiedlicher Bauteilsteifigkeiten von Motorblock und/oder Zylinderkopf sowie der im Motorbetrieb zu erwartenden örtlich unterschiedlichen Wärmedehnungen dieser Motorbauteile), die Fig. 4B die Höhenprofilierung der Stopper lediglich unter Berücksichtigung der Abnahme der Pressung mit größer werdendem Abstand von den Zylinderkopfschrauben, jedoch ohne eine Höhenprofilierung gemäß dem Grundgedanken der vorliegenden Erfindung, die Fig. 4C die Höhenprofilierung der Stopper lediglich unter Berücksichtigung der größeren Wärmedehnung des Motorblocks in den stegförmigen Bereichen zwischen einander benachbarten Brennräumen, jedoch wiederum ohne eine Höhenprofilierung gemäß dem Grundgedanken der vorliegenden Erfindung, die Fig. 4D die Höhenprofilierung der Stopper gemäß dem Grundgedanken der vorliegenden Erfindung sowie unter Berücksichtigung der Abnahme der Pressung mit größer werdendem Abstand von den Zylinderkopfschrauben (d. h. die Höhenprofilierung gemäß einer Überlagerung der Höhenprofilierungen nach den Figuren 4A und 4B), und die Fig. 4E die Höhenprofilierung der Stopper gemäß einer bevorzugten Ausführungsform der Erfindung, nämlich unter Berücksichtigung des Grundgedankens der vorliegenden Erfindung, der Abnahme der Pressung mit zunehmendem Abstand von den Zylinderkopfschrauben sowie der größeren Wärmedehnung des Motorblocks in den stegförmigen Wandbereichen des Motorblocks zwischen einander benachbarten Brennräumen, wobei in den Figuren 4A bis 4E die Höhe der Stopper übertrieben groß dargestellt wurde, um die Höhenprofilierungen zeichnerisch darstellen zu können.

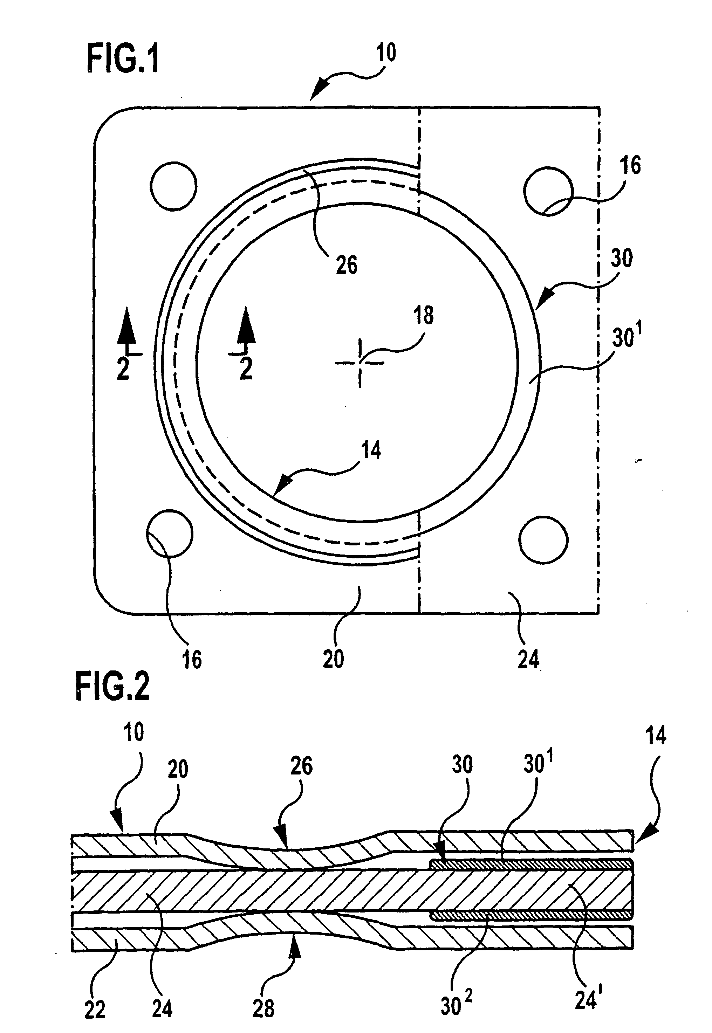

Die Fig. 1 zeigt eine Zylinderkopfdichtung mit einer Dichtungsplatte 10, welche aus drei Metallblechlagen (siehe Fig. 2) zusammengesetzt ist und aus der zumindest im wesentlichen kreisrunde Brennraumöffnungen 14 sowie Schraubenöffnungen 16 für den Durchtritt von Zylinderkopfschrauben ausgestanzt wurden - von den Brennraumöffnungen der Dichtung zeigt die Fig. 1 nur eine einzige, deren Zentrum bzw. Achse mit 18 bezeichnet wurde.

Die Dichtungsplatte 10 setzt sich zusammen aus einem oberen Deckblech 20, einem unteren Deckblech 22 und einem dazwischen angeordneten Trägerblech 24. Die Abdichtung der Brennraumöffnung 14 bzw. des zugehörigen Brennraums gegen den Austritt von Brenngasen erfolgt im wesentlichen durch in der Draufsicht auf die Dichtungsplatte 10 kreisringförmige Sicken 26 und 28 in den beiden Deckblechen 20 und 22; diese Sicken verlaufen konzentrisch zur Brennraumöffnung 14 und sind bei der dargestellten Ausführungsform als sogenannte Vollsicken ausgebildet, welche in Richtung auf das Trägerblech 24 vorspringen. Die Sicken 26 und 28 müssen bei eingebauter Dichtung im Motorbetrieb im Sinne einer Abflachung senkrecht zur Dichtungsplatte 10 federelastisch verformbar sein, weshalb die Deckbleche 20 und 22 aus Federstahlblech bestehen.

Damit die beiden Sicken 26 und 28 im Motorbetrieb nicht übermäßig verformt, d. h. flachgedrückt werden, ist am Trägerblech 24 ein erfindungsgemäßer Stopper 30 ausgebildet; dieser liegt bezüglich der Achse 18 der Brennraumöffnung 14 radial innerhalb der Sicken 26 und 28, er könnte aber auch radial außerhalb dieser Sicken liegen oder es könnte sowohl radial innerhalb, als auch radial außerhalb der Sicken ein solcher Stopper vorgesehen sein. Es versteht sich ferner von selbst, daß die beiden Sicken 26 und 28 einander nicht exakt gegenüberliegen müßten - die Sicken müssen nur mindestens einem Stopper benachbart sein und radial außerhalb bzw. innerhalb des Stoppers liegen. Wie sich aus Fig. 1 ergibt, umschließt der Stopper 30 als kreisringförmiges Band (in einer Draufsicht auf das Trägerblech 24) die Brennraumöffnung 14, wobei bei der dargestellten Ausführungsform dieses Band überall dieselbe Breite aufweist, was jedoch nicht stets der Fall sein muß, da es sich bei manchen Zylinderkopfdichtungen empfehlen kann, die Breite des Stoppers in an sich bekannter Weise um die Brennraumöffnung herum zu variieren, d. h. einen breitenprofilierten Stopper vorzusehen.

Bei einem Mehrzylindermotor ist die Dichtungsplatte 10 mit mehreren Brennraumöffnungen 14 und für jede Brennraumöffnung mit einem Abdichtsystem versehen, bestehend aus mindestens einer Sicke und mindestens einem Stopper, bei der in den Figuren 1 und 2 dargestellten Ausführungsform bestehend aus jeweils zwei Sicken und einem Stopper.

Bei der in Fig. 2 dargestellten Ausführungsform besteht der als Ganzes mit 30 bezeichnete Stopper aus einem an die Brennraumöffnung 14 angrenzenden kreisringförmigen Bereich 24' des Trägerblechs 24 sowie zwei kreisringförmigen Stopperringen 30¹ und 30², welche auf das Trägerblech 24 aufgebracht wurden. Bei diesen Stopperringen handelt es sich im einfachsten Fall um ausgestanzte Blechringe, welche z. B. durch Laserschweißen am Trägerblech 24 befestigt wurden.

Bei den weit verbreiteten herkömmlichen Zylinderkopfdichtungen liegt die Dicke des Trägerblechs 24 im Bereich von ca. 0,2 mm bis ca. 1,0 mm, die Dicke der überall gleich dicken Stopperringe 30¹ und 30² im Bereich von ca. 0,05 mm bis ca. 0,1 mm, so daß die Fig. 2 die Dickenverhältnisse nicht maßstäblich richtig wiedergibt. Ferner sei noch darauf hingewiesen, daß sich ein Stopper ähnlich dem in Fig. 2 dargestellten Stopper auch durch ein derartiges Verformen des Trägerblechs 24 herstellen ließe, daß dieses in einem die Brennraumöffnung 14 kreisringförmig umgebenden Bereich eine größere Dicke als außerhalb dieses Bereichs aufweist, wobei der Stopper 30 vorzugsweise über die beiden Hauptoberflächen des originären Trägerblechs 24 übersteht (beispielsweise um jeweils ca. 0,05 mm bis ca. 0,1 mm). In jedem Fall wird die Gesamtdicke des Stoppers 30 so bemessen, daß bei nicht-gepreßter Dichtung zwar die Sicken 26 und 28 gegen das Trägerblech 24 anliegen, jedoch zwischen dem Stopper 30 und zumindest einem der Deckbleche 20, 22, vorzugsweise zwischen dem Stopper 30 und jedem dieser Deckbleche ein Spalt verbleibt, so wie dies in Fig. 2 dargestellt ist - dadurch wird gewährleistet, daß die Sicken 26 und 28 im Motorbetrieb zwar elastisch abgeflacht, jedoch niemals völlig plattgedrückt und damit übermäßig verformt werden können.

Während die Figuren 1 und 2 nur einen Endbereich der erfindungsgemäßen Zylinderkopfdichtung darstellen, zeigt die Fig. 3 eine Draufsicht auf das ganze Trägerblech 24 einer Zylinderkopfdichtung für einen Dreizylindermotor, so daß dann die Dichtungsplatte 10 der Zylinderkopfdichtung mit drei Brennraumöffnungen 14 versehen ist. Die senkrecht zur Ebene der Dichtungsplatte 10 und durch die Achsen 18 der Brennraumöffnungen 14 verlaufende Längsmittelebene der Dichtung wurde mit 32 bezeichnet, die Quermittelebene der Dichtung mit 34 - die Quermittelebene verläuft senkrecht zur Längsmittelebene 32 und besitzt gleich große Abstände von den Achsen 18 der endständigen Brennraumöffnungen 14, d. h. von den Achsen der außenliegenden Brennraumöffnungen.

Da es sich bei einer erfindungsgemäßen Zylinderkopfdichtung auch um eine einlagige Dichtung handeln kann, welche also nur eine einzige Blechlage aufweist, die sowohl mit Abdichtsicken für die Brennraumöffnungen, als auch mit Stoppern zum Schutz dieser Sicken vor einer übermäßigen Verformung versehen ist, wurden in den Figuren 4A bis 4E der Einfachheit halber Stopper nur auf der einen Seite der jeweils gezeigten Blechlage dargestellt, diese Blechlage wurde aber trotzdem als Trägerblech 24 bezeichnet. Da bei einer erfindungsgemäßen Dichtung für einen Mehrzylindermotor die den verschiedenen Brennraumöffnungen zugeordneten Stopper in ihrer Höhe bzw. Dicke unterschiedlich gestaltet sind, wurden in den Figuren 3 und 4A bis 4E die dort gezeigten Stopperringe in Analogie zu Fig. 2 mit 130¹, 230¹ und 330¹ gekennzeichnet. Es versteht sich aber von selbst, daß in Abwandlung der Figuren 4A bis 4E derartige Stopperringe auf beiden Seiten der jeweils dargestellten Blechlage (Trägerblech 24) vorgesehen sein könnten.

Wie bereits erwähnt, zeigt die Fig. 4A eine Höhenprofilierung der Stopper bzw. Stopperringe 130¹, 230¹ und 330¹ gemäß dem Grundgedanken der vorliegenden Erfindung, durch den - im Vergleich zu einer herkömmlichen Dichtung - die von den Zylinderkopfschrauben erzeugten, auf die Dichtung einwirkenden Pressungskräfte im Bereich der Längsenden der Dichtung verringert und in Richtung auf die Quermittelebene 34 der Dichtung erhöht werden sollen. Wie in Fig. 4A durch die strichpunktierte Linie 40 angedeutet, soll die wirksame Höhe der Stopperringe mit wachsender Entfernung von der Quermittelebene 34 abnehmen. Die Gestalt der endständigen Stopperringe 130¹ und 330¹ entspricht also einem Hohlzylinder, dessen eine, dem Trägerblech 24 zugewandte Stirnfläche eine Ebene definiert, die senkrecht zur Zylinderachse verläuft, während seine andere Stirnfläche eine Ebene definiert, welche schräg zur Zylinderachse verläuft. Die Gestalt des Stopperrings 230¹ entspricht hingegen einem Hohlzylinder, dessen eine, dem Trägerblech 24 zugewandte Stirnfläche wieder eine senkrecht zur Zylinderachse verlaufende Ebene definiert, während seine andere Stirnfläche zwei gegeneinander geneigte Ebenen definiert, die beide denselben Winkel mit der Zylinderachse bilden und jeweils über den halben Umfang des Hohlzylinders dessen Wandung begrenzen.

Wie sich aus dem Vorstehenden bereits ergibt, zeigen die Figuren 4B und 4C keine erfindungsgemäßen Gestaltungen der Stopper bzw. Stopperringe 130¹, 230¹ und 330¹; vielmehr zeigt die Fig. 4B eine bekannte Höhenprofilierung der Stopperringe, durch die berücksichtigt wird, daß die von den Zylinderkopfschrauben erzeugten, auf die Dichtung einwirkenden Pressungskräfte mit zunehmendem Abstand von den Zylinderkopfschrauben (bzw. Schraubenöffnungen 16) abnehmen, wobei die in Fig. 4B dargestellte Höhenprofilierung natürlich nur für die in Fig. 3 gezeigte Anordnung der Schraubenöffnungen 16 gilt. Die in Fig. 4B gezeigte Höhenprofilierung könnte auch so modifiziert werden, wie es aus der DE-41 42 600-C2 hervorgeht, um die aufgrund von Hohlräumen örtlich unterschiedlich verminderte Bauteilsteifigkeit von Motorblock und/oder Zylinderkopf zu berücksichtigen. In dem in Fig. 4B dargestellten einfacheren Fall der Berücksichtigung lediglich des Umstands, daß die Pressungskräfte mit zunehmendem Abstand von den Schraubenöffnungen 16 abnehmen, weisen alle Stopper bzw. Stopperringe 130¹, 230¹ und 330¹ dasselbe Höhenprofil auf, so wie dies in Fig. 4B durch die identischen strichpunktierten Linien 50 angedeutet wurde, d. h. alle Stopperringe sind identisch, und bei jedem Stopperring ändert sich seine für einen Schutz der benachbarten Sicke zur Verfügung stehende wirksame Höhe wie folgt (wozu auf den in Fig. 3 eingezeichneten Winkel α Bezug genommen wird, der sich im Gegenuhrzeigersinn von 0° in der Längsmittelebene 32 über 90° in der Quermittelebene 34, 180° wieder in der Längsmittelebene 32, 270° wieder in der Quermittelebene 34 bis 360° wieder in der Längsmittelebene 32 ändert): Jeweils in der Mitte zwischen den Schraubenöffnungen 16, d. h. bei α = 0°, α = 90°, α = 180° und α = 270°, beträgt die Höhe des Stopperrings ein Maximum, in der Nähe der Schraubenöffnungen 16, d. h. bei α = ca. 45°, α = ca. 135°, α = ca. 225° und α = ca. 315°, hingegen ein Minimum, und zwischen diesen Extremwerten nimmt die Höhe des Stopperrings stetig zu bzw. stetig ab.

Auch die Fig. 4C zeigt Höhenprofile von Stoppern bzw. Stopperringen, welche den Grundgedanken der vorliegenden Erfindung noch nicht berücksichtigen, sondern nur der örtlich unterschiedlichen Wärmedehnung insbesondere des Motorblocks Rechnung tragen, so wie sich dies aus der deutschen Patentanmeldung Nr. 101 17 178 der Firma ElringKlinger AG vom 5. April 2001 ergibt. Die Tatsache, daß sich bei Erwärmung des Motors auf Betriebstemperatur die Bereiche vor allem des Motorblocks, welche zwischen zwei einander benachbarten Brennräumen liegen (d. h. bei α = 0° und α = 180°), stärker dehnen als andere Bereiche, wird durch solche Höhenprofile der Stopperringe 130¹, 230¹ und 330¹ berücksichtigt, wie sie in Fig. 4C durch die strichpunktierten Linien 60¹, 60² und 60³ dargestellt wurden, wobei die Höhenprofile der Stopperringe 130¹ und 330¹ dieselben sind, jedoch spiegelbildlich zur Quermittelebene 34. Die Höhe des Stopperrings 130¹ ist also im Bereich von α = 0° ± ca. 20° abgesenkt, sonst aber überall gleich, und entsprechendes gilt für die Höhe des Stopperrings 330¹ für α = 180° ± ca. 20°, während die Höhe des Stopperrings 230¹ in den Bereichen α = 0° ± ca. 20° und α = 180° ± 20° abgesenkt, sonst jedoch überall gleich groß ist.

Die Fig. 4D zeigt nun eine erfindungsgemäße Höhenprofilierung der Stopperringe, angedeutet durch die strichpunktierten Linien 70¹, 70² und 70³, wobei (ebenso wie in den anderen Figuren 4A, 4B, 4C und 4E) die die Höhenprofile andeutenden strichpunktierten Linien insgesamt wieder spiegelbildlich zur Quermittelebene 34 verlaufen. Die in Fig. 4D dargestellten Höhenprofile machen von dem Grundgedanken der vorliegenden Erfindung Gebrauch und berücksichtigen überdies die Tatsache, daß die von den Zylinderkopfschrauben erzeugten, auf die Dichtung einwirkenden Pressungskräfte mit zunehmendem Abstand von den Schraubenöffnungen 16 abnehmen; die in Fig. 4D dargestellten Linien 70¹, 70² und 70³ ergeben sich infolgedessen durch eine Überlagerung der Linien 50 aus Fig. 4B und der Linie 40 aus Fig. 4A.

Die in Fig. 4E durch strichpunktierte Linien 80¹, 80² und 80³ dargestellten Höhenprofile machen vom Grundgedanken der vorliegenden Erfindung Gebrauch, berücksichtigen aber überdies die Abnahme der Pressungskräfte mit zunehmendem Abstand von den Schraubenöffnungen 16 sowie die Zunahme der Pressungskräfte durch höhere Wärmedehnungen in den schmalen Bereichen zwischen einander benachbarten Brennraumöffnungen. Die Höhenprofile gemäß den Linien 80¹, 80² und 80³ in Fig. 4E ergeben sich also aus den Figuren 4C und 4D dadurch, daß ein Mittelwert gebildet wird aus der Vergrößerung der Höhe der Stopper gemäß Fig. 4D und der Verminderung der Stopperhöhe gemäß Fig. 4C.

Da die Figuren 4A bis 4E die Höhenprofile der Stopper bzw. Stopperringe, d. h. die Höhenunterschiede, übertrieben groß darstellen, sei darauf hingewiesen, daß die Höhenunterschiede sich in der Größenordnung von einigen Hundertstel Millimeter bewegen. Beträgt bei einer herkömmlichen Zylinderkopfdichtung mit identischen und überall gleich hohen Stopperringen die für den Sickenschutz wirksame Stopperringhöhe z. B. 0,12 mm, liegen bei einer erfindungsgemäßen Dichtung das Maximum der Stopperringhöhe bei ca. 0,12 mm und das Minimum der Stopperringhöhe bei ca. 0,08 mm, d. h. der Schwankungsbereich der Stopperringhöhe beträgt ca. 0,04 mm, wobei im Vergleich zu der erwähnten bekannten Dichtung die Stopperhöhe im Bereich der Quermittelebene der Dichtung ungefähr dieselbe ist, in Richtung auf die Längsenden der Dichtung jedoch vermindert ist.

Es soll noch einmal ausdrücklich darauf hingewiesen werden, daß es für die mit der vorliegenden Erfindung erzielbaren Vorteile nicht auf die absolute Stopperhöhe ankommt, auch nicht auf die Höhe eines auf ein Trägerblech aufgebrachten Stoppers, sondern auf die wirksame Stopperhöhe, die auch dadurch erfindungsgemäß variiert werden kann, daß man auf ein Trägerblech lauter identische und überall gleich hohe Stopperringe aufbringt, jedoch das Trägerblech im Bereich der Stopperringe mit einem erfindungsgemäßen Höhenprofil versieht, z. B. durch Prägen.

## Patentansprüche

1. Zylinderkopfdichtung mit einer mindestens eine Blechlage (20, 22, 24) aufweisenden Dichtungsplatte (10) für einen Verbrennungsmotor, welcher mindestens eine Zylinderreihe mit zwei endständigen Zylindern und wenigstens einem Zwischenzylinder besitzt und einen Motorblock sowie einen die Brennräume dieser Zylinder überdeckenden Zylinderkopf aufweist, zwischen dem und dem Motorblock die Zylinderkopfdichtung mittels Zylinderkopfschrauben einspannbar ist, wobei die Dichtungsplatte mit Schrauben-und Fluiddurchgangsöffnungen (16) sowie für jeden der Brennräume mit einer Brennraumöffnung (14) versehen ist und die mindestens eine Blechlage für jede Brennraumöffnung mindestens eine diese umschließende Abdichtsicke (26, 28) aufweist, deren Verformung in Richtung senkrecht zur Dichtungsplattenebene durch jeweils mindestens einen sich konzentrisch zur Sicke erstreckenden Verformungsbegrenzer (130¹, 230¹, 330¹) der Dichtungsplatte (10) begrenzt wird, so daß jeder Brennraumöffnung (14) ein mindestens eine Abdichtsicke sowie mindestens einen Verformungsbegrenzer aufweisendes Abdichtsystem zugeordnet ist, und wobei die für eine Begrenzung der Sickenverformung verfügbare, senkrecht zur Dichtungsplattenebene gemessene wirksame Höhe eines jeden Verformungsbegrenzers, über seinen Umfang gemittelt, einen Höhenmittelwert aufweist, **dadurch gekennzeichnet, daß** zur Vergleichmäßigung der bei eingebauter Zylinderkopfdichtung im Motorbetrieb auf die Abdichtsysteme einwirkenden Pressungskräfte
(a) die Verformungsbegrenzer (130¹, 230¹, 330¹) entlang ihres Umfangs entsprechend der infolge der Betriebstemperatur des Verbrennungsmotors zu erwartenden, örtlich unterschiedlichen Wärmedehnungen von Motorblock und/oder Zylinderkopf derart höhenprofiliert sind, daß der bei eingespannter Zylinderkopfdichtung und Betriebstemperatur des Verbrennungsmotors auf einen Verformungsbegrenzer einwirkende Pressdruck längs des Umfangs des Verformungsbegrenzers vergleichmäßigt ist, und
(b) wobei die Höhenmittelwerte der den endständigen Zylindern zugeordneten Verformungsbegrenzer (130¹, 330¹) kleiner sind als der Höhenmittelwert des mindestens einen weiteren Verformungsbegrenzers (230¹).

2. Zylinderkopfdichtung nach Anspruch 1, **dadurch gekennzeichnet, daß** mindestens einer der Verformungsbegrenzer (130¹, 230¹, 330¹) längs seines Umfangs entsprechend einem Mittelwert zwischen einer sich bei eingebauter Dichtung infolge örtlich geringerer Bauteilsteifigkeit von Motorblock und/oder Zylinderkopf ergebenden Reduzierung der Pressungskräfte und einer Erhöhung der Pressungskräfte infolge örtlich größerer Wärmedehnung derart höhenprofiliert ist, daß der bei eingespannter Zylinderkopfdichtung und Betriebstemperatur des Verbrennungsmotors auf den Verformungsbegrenzer einwirkende Pressdruck längs des Umfangs des Verformungsbegrenzers vergleichmäßigt ist.

3. Zylinderkopfdichtung nach Anspruch 1 oder 2, **dadurch gekennzeichnet, daß** die wirksame Höhe des Verformungsbegrenzers (130¹, 230¹, 330¹) zwischen einander benachbarten Brennraumöffnungen (14) gegenüber der wirksamen Höhe in der Nachbarschaft von Schraubendurchgangsöffnungen (16) erniedrigt ist.

4. Zylinderkopfdichtung nach einem der Ansprüche 1 bis 3 mit einer senkrecht zur Dichtungsplattenebene verlaufenden Quermittelebene (34), von welcher die Zentren (18) der den endständigen Zylindern zugeordneten Brennraumöffnungen (14) gleiche Abstände aufweisen, **dadurch gekenn-zeichnet, daß** die Verformungsbegrenzer (130¹, 230¹, 330¹) einen umso kleineren Höhenmittelwert aufweisen, je größer der Abstand des Zentrums (18) der dem jeweiligen Verformungsbegrenzer zugeordneten Brennraumöffnung (14) von der Quermittelebene (34) ist.

5. Zylinderkopfdichtung nach einem der vorstehenden Ansprüche, **dadurch gekennzeichnet, daß** die Dichtungsplatte (10) sowohl radial innerhalb als auch radial außerhalb der Abdichtsicke (26, 28) mit einem Verformungsbegrenzer versehen ist.

6. Zylinderkopfdichtung nach einem der vorstehenden Ansprüche, **dadurch gekennzeichnet, daß** der Verformungsbegrenzer an der mit der Abdichtsicke versehenen Blechlage vorgesehen ist.

7. Zylinderkopfdichtung nach einem der Ansprüche 1 bis 5, deren Dichtungsplatte (10) wenigstens zwei Blechlagen (20, 22, 24) aufweist, von denen die eine (20, 22) mit der Abdichtsicke (26, 28) versehen ist, **dadurch gekennzeichnet, daß** der Verformungsbegrenzer (30) an der anderen Blechlage (24) vorgesehen ist.

8. Zylinderkopfdichtung nach einem der vorstehenden Ansprüche, **gekennzeichnet durch** einen auf einer Blechlage (24) aufliegenden Stopperring (30¹, 30²), welche zusammen einen Verformungsbegrenzer (30) bilden, wobei zur Vergleichmäßigung der Pressungskräfte die Blechlage im Bereich des Stopperrings höhenprofiliert ist.

## Claims

1. Cylinder head gasket with a gasket plate (10) for an internal combustion engine, said plate having at least one layer of sheet metal (20, 22, 24), said engine having at least one row of cylinders with two terminal cylinders and at least one intermediate cylinder and an engine block as well as a cylinder head covering the combustion chambers of these cylinders, the cylinder head gasket being clampable between the cylinder head and the engine block by means of cylinder head screws, wherein the gasket plate is provided with screw and fluid openings (16) as well as with a combustion chamber opening (14) for each of the combustion chambers and the at least one layer of sheet metal has for each combustion chamber opening at least one sealing bead (26, 28) surrounding it, the deformation of said bead in a direction at right angles to the plane of the gasket plate being limited by at least one respective deformation limiter (130¹, 230¹, 330¹) of the gasket plate (10) extending concentrically to the bead such that a sealing system having at least one sealing bead as well as at least one deformation limiter is associated with each combustion chamber opening (14) and wherein the effective height of each deformation limiter measured at right angles to the plane of the gasket plate and available for limiting the deformation of the bead has, averaged over its circumference, an average height value, **characterized in that** to even out the pressing forces acting on the sealing system during operation of the engine with a cylinder head gasket clamped in place
a) the deformation limiters (130¹, 230¹, 330¹) have a height profile along their circumference in accordance with the locally varying heat expansions of engine block and/or cylinder head to be expected as a result of the operating temperature of the internal combustion engine such that the pressure acting on a deformation limiter with a cylinder head gasket clamped in place and at operating temperature of the internal combustion engine is evened out along the circumference of the deformation limiter and
b) wherein the average height values of the deformation limiters (130¹, 330¹) associated with the terminal cylinders are smaller than the average height value of the at least one additional deformation limiter (230¹).

2. Cylinder head gasket as defined in claim 1, **characterized in that** at least one of the deformation limiters (130¹, 230¹, 330¹) has a height profile along its circumference in accordance with an average value between a reduction in the pressing forces resulting with a gasket clamped in place as a result of a locally reduced component rigidity of engine block and/or cylinder head and an increase in the pressing forces as a result of a locally greater heat expansion such that the pressure acting on the deformation limiter with a cylinder head gasket clamped in place and at operating temperature of the internal combustion engine is evened out along the circumference of the deformation limiter.

3. Cylinder head gasket as defined in claim 1 or 2, **characterized in that** the effective height of the deformation limiter (130¹, 230¹, 330¹) between adjacent combustion chamber openings (14) is decreased in comparison with the effective height in the vicinity of screw openings (16).

4. Cylinder head gasket as defined in any one of claims 1 to 3 with a transverse central plane (34) extending at right angles to the plane of the gasket plate, the centers (18) of the combustion chamber openings (14) associated with the terminal cylinders having the same distances from said transverse central plane, **characterized in that** an average height value of the deformation limiters (130¹, 230¹, 330¹) is all the smaller the greater the distance of the center (18) of the combustion chamber opening (14) associated with the respective deformation limiter from the transverse central plane (34).

5. Cylinder head gasket as defined in any one of the preceding claims, **characterized in that** the gasket plate (10) is provided with a deformation limiter not only radially inside but also radially outside the sealing bead (26, 28).

6. Cylinder head gasket as defined in any one of the preceding claims, **characterized in that** the deformation limiter is provided on the layer of sheet metal provided with the sealing bead.

7. Cylinder head gasket as defined in any one of claims 1 to 5, the gasket plate (10) thereof having at least two layers of sheet metal (20, 22, 24), one of said layers (20, 22) being provided with the sealing bead (26, 28), **characterized in that** the deformation limiter (30) is provided on the other layer of sheet metal (24).

8. Cylinder head gasket as defined in any one of the preceding claims, **characterized by** a stopper ring (30¹, 30²) resting on a layer of sheet metal (24), said stopper ring and sheet metal layer together forming a deformation limiter (30), wherein the layer of sheet metal has a height profile in the area of the stopper ring in order to even out the pressing forces.

## Revendications

1. Joint de culasse comprenant une plaque d'étanchement (10) présentant au moins une couche de tôle (20, 22, 24), pour un moteur à combustion interne qui possède au moins une rangée de cylindres comportant deux cylindres terminaux et au moins un cylindre intermédiaire et qui comprend un bloc moteur ainsi qu'une culasse recouvrant les chambres de combustion de ces cylindres, le joint de culasse pouvant être serré au moyen de vis de culasse entre ladite culasse et le bloc moteur,
- dans lequel la plaque d'étanchement est munie d'ouvertures (16) de passage de vis et de passage de fluide ainsi que d'une ouverture de chambre de combustion (14) pour chaque chambre de combustion et la au moins une couche de tôle présente pour chaque ouverture de chambre de combustion au moins une moulure d'étanchement (26, 28) entourant celles-ci, dont la déformation est limitée en direction perpendiculaire au plan de la plaque d'étanchement respectivement par au moins un limiteur de déformation (130¹, 230¹, 330¹) de la plaque d'étanchement (10) s'étendant concentriquement à la moulure, de sorte qu'un système d'étanchement comprenant au moins une moulure d'étanchement ainsi qu'au moins un limiteur de déformation est associé à chaque ouverture de chambre de combustion (14) ; et
- dans lequel la hauteur efficace, mesurée perpendiculairement au plan, de chaque limiteur de déformation, disponible pour une limitation de la déformation de moulure, présente une valeur moyenne de hauteur moyennée sur sa périphérie,
**caractérisé en ce que**, pour uniformiser les forces de pression qui s'exercent sur les systèmes d'étanchement en fonctionnement du moteur lorsque le joint de culasse est monté :
a) les limiteurs de déformation (130¹, 230¹, 330¹) sont profilés en hauteur de manière correspondante aux dilations thermiques du bloc moteur et/ou de la culasse, lesquelles sont attendues en raison de la température de service du moteur à combustion interne et diffèrent localement, de sorte que la pression de poussée qui agit sur un limiteur de déformation lorsque le joint de culasse est fixé et lorsque le moteur à combustion interne a atteint la température de service, est uniformisée le long de la périphérie du limiteur de déformation ; et
b) les valeurs moyennes de hauteur des limiteurs de déformation (130¹, 330¹) associées aux cylindres terminaux sont inférieures aux valeurs moyennes de hauteur dudit au moins un autre limiteur de déformation (230').

2. Joint de culasse selon la revendication 1, **caractérisé en ce qu'**au moins un des limiteurs de déformation (130¹, 230¹, 330¹) est profilé en hauteur le long de sa périphérie de manière correspondante à une valeur moyenne entre une réduction des forces de pression qui résulte de la rigidité localement plus faible du bloc moteur et/ou de la culasse lorsque le joint est monté, et une augmentation des forces de pression en raison d'une dilatation thermique localement plus grande, de sorte que la pression de poussée qui agit sur le limiteur de déformation lorsque le joint de culasse est fixé et lorsque le moteur à combustion interne a atteint sa température de service, est uniformisée le long de la périphérie du limiteur de déformation.

3. Joint de culasse selon l'une ou l'autre des revendications 1 et 2, **caractérisé en ce que** la hauteur efficace du limiteur de déformation (130¹, 230¹, 330¹) est diminuée entre des ouvertures de chambre de combustion (14) mutuellement voisines, par rapport à la hauteur efficace au voisinage des ouvertures (16) de passage de vis.

4. Joint de culasse selon l'une des revendications 1 à 3, comportant un plan médian transversal (34) s'étendant perpendiculairement au plan de la plaque d'étanchement, à partir duquel les centres (18) des ouvertures de chambre de combustion (14) associées aux cylindres terminaux présentent les mêmes distances, **caractérisé en ce que** les limiteurs de déformation (130', 230¹, 330¹) présentent une valeur moyenne de hauteur d'autant plus faible que la distance entre le centre (18) de l'ouverture de chambre de combustion (14), associée au limiteur de déformation respectif, et le plan médian transversal (34) augmente.

5. Joint de culasse selon l'une des revendications précédentes, **caractérisé en ce que** la plaque d'étanchement (10) est munie d'un limiteur de déformation, aussi bien radialement à l'intérieur que radialement à l'extérieur de la moulure d'étanchement (26, 28).

6. Joint de culasse selon l'une des revendications précédentes, **caractérisé en ce que** le limiteur de déformation est prévu sur la couche en tôle munie de la moulure d'étanchement.

7. Joint de culasse selon l'une des revendications 1 à 5, dont la plaque d'étanchement (10) est munie d'au moins deux couches de tôle (20, 22, 24) dont l'une (20, 22) est dotée de la moulure d'étanchement (26, 28), **caractérisé en ce que** le limiteur de déformation (30) est prévu sur l'autre couche en tôle (24).

8. Joint de culasse selon l'une des revendications précédentes, **caractérisé par** une bague d'arrêt (30¹, 30²) disposée sur une couche en tôle (24), lesquelles forment conjointement un limiteur de déformation (30), et en ce que, pour uniformiser les forces de pression, la couche en tôle est profilée en hauteur dans la région de la bague d'arrêt.
